# EUROPEAN PATENT SPECIFICATION

(11) **EP 2 317 447 B1**
(45) Date of publication and mention of the grant of the patent: **22.01.2014**
(21) Application number: 10189145.5
(22) Date of filing: 27.10.2010
(51) Int. Cl.: G06F 17/28, G06F 17/30

(54) **In-context exact (ICE) matching**
Kontextabhängige exakte Übereinstimmung (ICE)
Correspondance exacte en contexte (ICE)

(30) Priority: 27.10.2009 GB 0918765
(43) Date of publication of application: 04.05.2011
(73) Proprietor: SDL plc, Maidenhead Berkshire SL6 7DY (GB)
(72) Inventor: Brockmann, Daniel, D-70563, Stuttgart (DE); Christ, Oliver, Waltham, MA 02451 (US)
(74) Representative: Käck, Jürgen

(56) References cited:
- US-A1- 2005 197 827

## Description

### Field of the Invention

This invention relates generally to processing content, and more particularly, to ensuring an exact translation match to source content including context in order to simplify and otherwise facilitate translation and other processing functions associated with the content.

### Background of the Invention

As information becomes more accessible on a global basis, especially given the advent and rapid utilization of the Internet and the World-Wide-Web, the role of translation has shifted away from simple transcription of source text into a target language. Translators today must ensure the timely and accurate deployment of the translated content to designated sites and customers. As such, the increased need for content translation has prompted numerous companies to develop tools that automate and aid in part of the translation process. Given that translators seek to translate content as quickly as possible, translation can be made more efficient with the greater flexibility in software functionality and the ability to save previous translations for future use. Therefore, tools have been created to save translations, including blocks and/or segments of translations, in computer memory ("translation memor"or"TM").

Translation memories, also known as translation databases, are collections of entries where a source text is associated with its corresponding translation in one or more target languages. Translation memory includes a database that stores source and target language pairs of text segments that can be retrieved for use with present texts and texts to be translated in the future. Typically, TMs are used in translation tools: when the translator "opens" a segment, the application looks up the database for equivalent source text. The result is a list of matches usually ranked with a score expressing the percentage of similarity between the source text in the document and in the TM. The translator or a different TM system provides the target text segments that are paired with the lookup segments so that the end product is a quality translation.

There are many computer-assisted translation (CAT) tools available to assist the translator, such as bilingual and multilingual dictionaries, grammar and spell checkers and terminology software, but TM goes one step further by making use of these other CAT tools while at the same time matching up the original source document stored in its database with the updated or revised document through exact and fuzzy matching. An exact match (100% match) is a match where there is no difference (or no difference that cannot be handled automatically by the tool) between the source text in the document and the source text in the TM. A fuzzy match (less than 100% match) is a match where the source text in the document is very similar, but not exactly the same, as the source text in the TM. Duplicated exact matches are also often treated as fuzzy matches. A TM system is used as a translator's aid, storing a human translator's text in a database for future use. For instance, TM can be utilized when a translator translates the original text, using translation memory to store the paired source and target segments. The translator could then reuse the stored texts to translate the revised or updated version of the text. Only the segments of the new text that do not match the old one would have to be translated. The alternative would be to use a manual translation system or a different CAT system to translate the original text. The TM system could then be used by a translator to translate the revision or update by aligning the texts produced by a translator or other CAT system and storing them in the TM database for present and future work. The translator could then proceed to translate only the segments of the new text, using TM as described above.

There are many advantages in using TMs: The translation can go much faster, avoid unnecessary re-typing of existing translations, and/or enable a translator to change only certain parts of the text. TMs also allow a better control of the quality of the translation. In the related art, TM was employed to speed the translation step in large batch projects. For example, a software company may release version 1 of its software product and need to translate the accompanying documentation. The documentation is broken into sentences and translated, with all sentence pairs captured in TM. Two years later the company releases version 2 of its software. The documentation has changed significantly, but there is also a significant portion similar to the original documentation. This time, as translators translate the documentation, their work is reduced through leveraging exact and fuzzy matches from the TM. As this example illustrates, TM is typically used as an aid in a pipeline process. In the related art, there are also some limitations with the utilization of TM.

Automatically leveraging translation using exact matches (without validating them) can generate incorrect translation since there is no verification of the context where the new segment is used compared to where the original one was used: this is the difference between true reuse and recycling. In the related art, TM systems are normally recycling systems. With Web content, and now with many types of content, it is common for a document to be translated, and then have minor changes made to it, and then have need for it to be translated again. For example, a web document listing the advantages of a product might be translated, but then a new advantage might be added and the document would therefore need to be translated again. In the related art, TM would reduce the effort of translating the document a second time. Exact matches for most sentences would exist where the source text was identical to one or more entries in the TM. The translator then makes sure that the right exact match is chosen for each by evaluating the appropriateness of a match to contextual information.

One example for an automated process for accurately choosing the best exact match for a given segment or validating whether a given exact match is an appropriate match for the context to which it is being applied is disclosed in US 2005/0197827 Al. In this document, methods, systems and program products are disclosed for determining a matching level of a text lookup segment with a plurality of source texts in a translation memory in terms of context. In particular, the invention determines any exact matches for the lookup segment in the plurality of source texts, and determines, in the case that at least one exact match is determined, that a respective exact match is an in-context exact (ICE) match for the lookup segment in the case that a context of the lookup segment matches that of the respective exact match. The degree of context matching required can be predetermined, and results prioritized.

In view of the foregoing, there is a need for an automated process which more accurately validates whether a given exact match is an appropriate match for the context to which it is being applied.

### Summary of the Invention

The invention is defined in claims 1, 12 and 13, respectively. Particular embodiments of the invention are set out in the dependent claims.

According to a first aspect of the invention there is provided a method of determining a matching level of a plurality of source texts stored in a translation memory to a lookup segment to be translated, the method comprising the steps of:
determining any exact matches for the lookup segment in the plurality of source texts; and
determining, in the case that at least one exact match is determined, that a respective exact match is an in-context exact, ICE, match for the lookup segment in the case that a context of the lookup segment matches that of the respective exact match,
wherein, in the case that greater than one ICE match is determined, the ICE match determining includes prioritizing each ICE match according to a degree of context matching in order that a more appropriate ICE match may be preferred over one or more other ICE matches; and
wherein the context includes at least two levels
characterized in that
said at least two levels comprise a source usage context level and a target usage context level;
said target usage context level comprises a preceding target usage context level and/or a post target usage context level; and
an ICE match with a target usage context level matching that of the lookup segment is attributed a higher degree of context matching than an ICE match with only a source usage context level matching that of the lookup segment.

Hence, when a translation memory is searched for occurrences of a particular lookup segment, if multiple exact matches are found, the invention allows disambiguation between the multiple exact matches. Disambiguation is carried out according to the context of the lookup segment compared to the context of each of the exact matches. If at least one context level of a segment matches that of the lookup segment, the segment is an ICE match. ICE matches will tend to be more relevant than non-ICE matches. ICE matches may be identified according to different levels of context, such as a source usage context level in the source language and/or a target usage context level in the target language.

According to the invention, in the case that greater than one ICE match is determined, the ICE match determining includes prioritizing each ICE match according to a degree of context matching in order that a more appropriate ICE match may be preferred over one or more other ICE matches. Hence, the invention allows disambiguation of multiple exact matches where higher priority ICE matches will tend to be more relevant translations than lower priority ICE matches.

Moreover, an ICE match with a target usage context level matching that of the lookup segment is attributed a higher degree of context matching than an ICE match with only a source usage context level matching that of the lookup segment. A target usage context will tend to indicate a more relevant match than a matching source usage context alone; hence the former is prioritized in favour of the latter.

In embodiments of the invention, an ICE match with both source and target usage context levels matching those of the lookup segment is attributed a higher degree of context matching than an ICE match with only a source usage context level matching that of the lookup segment. A combined matching source and target usage context will tend to indicate a more relevant match than a matching source target usage context alone; hence the former is prioritized in favour of the latter.

In one arrangement of the invention, the source usage context level comprises a preceding source usage context level and/or the target context usage level comprises the preceding target usage context level. The segment preceding the segment currently being translated (the current segment) in the source language and the translation of the segment preceding the current segment in the target language will tend to have more impact on the translation of the segment being translated than the source and target segments following the current segment have; hence, the contexts of segments preceding the current segment are considered important for disambiguation purposes.

In other arrangements of the invention, the source usage context level comprises a post source usage context level and/or the target context usage level comprises the post target usage context level. The segment following the segment currently being translated (the current segment) in the source language and the translation of the segment following the current segment in the target language can have an impact on the translation of the segment being translated; hence, the contexts of segments following the current segment can be considered either in addition or alternatively to consideration of the contexts of segments preceding the current segment.

In some embodiments of the invention, the at least two levels comprise a structural context level (see 'Definitions' section in detailed description below for meaning of structural context). Hence, structural context levels can be employed in disambiguation of ICE matches in addition to usage context levels.

In arrangements of the invention, in the case that greater than one ICE match is determined, the ICE match determining includes prioritizing each ICE match according to a degree of context matching in order that a more appropriate ICE match may be preferred over one or more other ICE matches,
wherein the source usage context level comprises a preceding source usage context level and the target context usage level comprises the preceding target usage context level, and
wherein an ICE match with a preceding source and/or preceding target usage context level matching that of the lookup segment is attributed a higher degree of context matching than an ICE match with only a structural context level matching that of the lookup segment. Translations with matching preceding source and target usage context levels will tend to be more relevant than translations with only a structural context matching; hence the former are prioritized over the latter.

In an embodiment of the invention, the ICE match determining step indicates that a respective exact match is an ICE match for the lookup segment only in the case that two or more context levels of the lookup segment match that of the respective exact match. An ICE match that matches a lookup segment on multiple context levels is more likely to be a more appropriate match than an ICE match which only matches the lookup segment on one context level; hence in some embodiments of the invention, only ICE matches with multiple context levels matching are considered for disambiguation purposes, i.e., in such embodiments of the invention, multiple exact matches are not disambiguated if only one context level matches that of the lookup segment (e.g. only the structural context or only the source usage level.

In an arrangement of the invention, the ICE match determining step indicates that a respective exact match is an ICE match for the lookup segment only in the case that at least one usage context level and a structural context level of the lookup segment match that of the respective exact match. ICE matches with both a usage context level and a structural context level matching will tend to be relevant translations for a lookup segment, hence such ICE matches are considered important during disambiguation.

In another arrangement of the invention, the at least one usage context level comprises the preceding target usage context level. Segments preceding the segment currently being translated in the target language are generally a very good indication of a relevant translation; hence, preceding target usage context level matches are preferentially prioritized. In preferred embodiments of the invention, disambiguation is carried out on the basis of target usage context levels in combination with source usage context levels.

In yet another arrangement of the invention, the at least one usage context level comprises a preceding source usage context level. Segments preceding the segment currently being translated in the source language are generally a good indication of a relevant translation, hence preceding source usage contact level matches can alternatively be prioritized.

In embodiments of the invention, in the case that greater than one ICE match is determined, the ICE match determining includes prioritizing each ICE match according to a degree of context matching in order that a more appropriate ICE match may be preferred over one or more other ICE matches. The prioritizing may include a number of different preferring steps which can be considered in sequence in order to find the most appropriate match for a lookup segment. A first step may involve first preferring an ICE match having source usage and target usage context levels and a structural context level that match those of the lookup segment. A second step may involve second preferring an ICE match having source and target usage context levels matching those of the lookup segment. Preferably the source context level is a preceding source usage context level and the target usage context level is the preceding target usage context level. A third step may involve third preferring an ICE match having either a preceding source usage context level or the preceding target usage context level that matches that of the lookup segment over an ICE match having only either a post source usage context level or a post target usage context level matching that of the lookup segment. A fourth step may involve fourth preferring an ICE match having any usage context level matching that of the lookup segment over an ICE match having only a structural context level matching that of the lookup segment. A fifth step may involve fifth preferring an ICE match having a structural context level matching that of the lookup segment over an ICE match having a different structural context level from that of the lookup segment. A sixth step may involve sixth preferring an ICE match with a closest position to the position of the lookup segment within the asset.

A position within in an asset could be determined on the basis of segment number where segments in an asset could be consecutively numbered and the numbers used as respective segment identifiers. Alternatively, a position could be determined on the basis of line or word number in an asset. Further, a structural usage context can be interpreted as a form of position in an asset, i.e. indicating such a position on the basis of whether the match occurs within a "heading'','table cell'',''paragraph'',''footnote''', etc.

If one preferring step provides a conclusive result, then the disambiguation procedure is ended, otherwise the procedure can move on to a successive step, and so on until a conclusive result is arrived at in the form of a preferred match. Other embodiments of the invention may include some or all of the above preferring steps in a different order and may be combined with other preferring steps, either alternatively or in addition to the above preferring steps.

Embodiments of the invention involve allowing a user to select the ICE match based on the prioritization. Hence, instead of an ICE match being automatically selected and inserted into the translated document, the ICE matches may be displayed to a user and the user may select an ICE match on the basis of rank of the displayed ICE matches. Further, the ICE matches may be ranked and displayed according to the number of matching context levels and/or the type (source, target , post, preceding, structural, etc.) of matching context levels.

In embodiments of the invention, the lookup segment includes a plurality of lookup segments that are substantially identical in terms of content, and wherein the ICE match determining step includes determining an ICE match for each lookup segment. Hence, multiple segments can be processed together in batches or substantially simultaneously in order to reduce the overall processing required. When a batch of segments to be translated is processed, a heuristics-based approach can be applied to help select the "best" translation of a segment in order to be able to determine the next segment's ICE level (when target usage context is taken into account). One such approach could be to use the best ICE match, or a single exact match, optionally combined with a fallback mechanism such as segment position, date of last translation, asset metadata, etc. A heuristics-based approach is useful in scenarios where there is little or no interaction with a translator, in which case a translation system cannot be certain that a disambiguated match (ICE match or other) is an adequate enough match for the segment.

In some arrangements of the invention, at least one lookup segment has a different ICE match from at least one other lookup segment. Typically, one lookup segment will have a different ICE match which can help in the process of identifying ICE matches for each lookup segment.

According to a second aspect of the invention there is provided a system for determining a matching level of a plurality of source texts stored in a translation memory to a lookup segment to be translated, the system comprising:
means for determining any exact matches for the lookup segment in the plurality of source texts; and
means for determining, in the case that at least one exact match is determined, that a respective exact match is an in-context exact (ICE) match for the lookup segment in the case that a context of the lookup segment matches that of the respective exact match;
wherein, in the case that greater than one ICE match is determined, the ICE match determining includes prioritizing each ICE match according to a degree of context matching in order that a more appropriate ICE match may be preferred over one or more other ICE matches; and
wherein the context includes at least two levels
characterized in that
said at least two levels comprise a source usage context level and a target usage context level;
said target usage context level comprises a preceding target usage context level and/or a post target usage context level; and
an ICE match with a target usage context level matching that of the lookup segment (154A-B) is attributed a higher degree of context matching than an ICE match with only a source usage context level matching that of the lookup segment (152A-B).

According to a third aspect of the invention there is provided computer software adapted to perform the method of the first aspect of the invention.

According to alternative arrangements there is provided a method of storing a translation unit of source text and target text in a translation memory, the method comprising the steps of:
assigning a context to the translation unit, wherein the context includes at least two levels, said at least two levels comprising a source usage context level and a target usage context level; and
storing the context with the translation unit.

According to alternative arrangements there is provided a system for storing a translation unit of source text and target text in a translation memory, the system comprising:
means for assigning a context to the translation unit, wherein the context includes at least two levels, said at least two levels comprising a source usage context level and a target usage context level; and
means for storing the context with the translation unit.

According to alternative arrangements there is provided a translation memory comprising:
a plurality of source texts for comparison to a lookup segment; and
a context identifier for each source text,
wherein the context identifier includes a source usage context portion and a target usage context portion.

In some embodiments of the invention, the source usage and/or target usage context portion comprise a preceding and/or post usage context portion. In other embodiments of the invention, the context identifier comprises a structural context portion. Hence, context identifier data can be stored in association with translation units in a translation memory in order that their associated context may be readily identified such as during search of the translation memory for a lookup segment. A translation unit may have multiple usage context and/or multiple structural associated context identifiers.

According to arrangements of the invention there is provided a client-side system for interacting with a translation system including a translation memory, the system comprising:
means for assigning a segment identifier to a segment to be translated by the translation system, the segment identifier indicating a source usage context and a target usage context of the segment; and
means for communicating the segment identifier assignment for storage as part of the translation memory.

In arrangements of the invention, the segment identifier comprises a structural context. Hence, segments can be identified according to their structural context.

According to arrangements of the invention there is provided a method of determining a matching level of a plurality of source texts stored in a translation memory to a lookup segment to be translated, the method comprising the steps of:
determining any fuzzy matches for the lookup segment in the plurality of source texts; and
determining, in the case that at least one fuzzy match is determined, that a respective fuzzy match is an in-context fuzzy match for the lookup segment in the case that a context of the lookup segment matches that of the respective fuzzy match.

Hence, such arrangements also allow for disambiguation between multiple fuzzy matches. Disambiguation is carried out according to the context of the lookup segment compared to the context of each of the fuzzy matches. If at least one context level of a segment matches that of the lookup segment, the segment is an in-context fuzzy match. In-context fuzzy matches will tend to be more relevant than non-in-context fuzzy matches. Preferably, the context comprises a structural context.

In-context fuzzy matches may be identified according to different levels of context, such as a structural context level and/or metadata. Similarly, to ICE matches, prioritization of different context levels may be applied when disambiguating between in-context fuzzy matches.

The teaching described herein may be applied to fuzzy matches having the same degree (also referred to as fuzzy matching score) of fuzzy matching, e.g. same percentage fuzzy match. One example application may be to disambiguate between several fuzzy matches each having the same fuzzy matching degree of 97%. Another example application may be to disambiguate between several fuzzy matches each having a fuzzy matching degree of 99%, The term same here could be exactly the same or approximately the same, for example fuzzy matches whose degrees of fuzzy matching are the same when rounded to the nearest percentage value or suchlike.

Alternatively or in addition to prioritization of fuzzy matches having the same degree of fuzzy matching, prioritization of fuzzy matches may be carried out within certain ranges (or score bands) of degrees of fuzzy matching, say between 99-95%, or 85-94%, where prioritization could be carried out using a structural context such as heading, paragraph, table cell, etc,

The teaching described herein may also be applied to fuzzy matches of differing degrees of fuzzy matching, where a first fuzzy match having a lower degree of fuzzy matching (e.g. a 98% fuzzy match) than a second fuzzy match (e.g. a 99% fuzzy match) may still be considered a more appropriate match for a lookup segment because the first fuzzy match has a context level matching the lookup segment, whereas the second fuzzy match has no context level matching the lookup segment, This can occur despite the first fuzzy match having a lower degree of fuzzy matching than the second fuzzy match.

The teaching described herein may also be applied to a hybrid scenario where the contexts of both exact and fuzzy matches are considered. Here a fuzzy match of say 99% may still be considered a more appropriate match than an exact match because the fuzzy match has a context level matching the lookup segment, whereas the exact match has no context level matching the lookup segment. Again, different levels of context matching and prioritization of different context levels may be applied to such a hybrid arrangement.

According to the teaching disclosed herein there is provided a system for determining a matching level of a plurality of source texts stored in a translation memory to a lookup segment to be translated, the system comprising:
means for determining any fuzzy matches for the lookup segment in the plurality of source texts; and
means for determining, in the case that at least one fuzzy match is determined, that a respective fuzzy match is an in-context fuzzy match for the lookup segment in the case that a context of the lookup segment matches that of the respective fuzzy match.

According to the teaching disclosed herein there is provided computer software adapted to perform the method of the above embodiments of the invention.

The foregoing and other features of the invention will be apparent from the following more particular description of embodiments of the invention.

### Brief Description of the Drawings

The embodiments of this invention will be described in detail, with reference to the following figures, wherein like designations denote like elements, and wherein:
FIG. 1 shows a block diagram of a computer system using an ICE match translation system according to the invention.
FIGS. 2A-B show a flow diagram of one embodiment of an operational methodology of the system of FIG. 1.
FIG. 3 shows a couple of entries in an illustrative translation memory.
FIG. 4 shows an illustrative source asset including the entries of FIG. 3.
FIG. 5 shows a flow diagram of one embodiment for translation memory generation according to the invention.
FIG. 6 shows a flow diagram of an alternative embodiment for translation memory generation according to the invention.

### Detailed Description of the Invention

The detailed description includes the following headings for convenience purposes only: I. Definitions, II. General Overview, III. System Overview, IV. Operational Methodology, and V. Conclusion.

### I. Definitions

"Asset" means a content source defining a bound collection of related content or grouping of text segments, e.g., by context, usage, size, etc. In general, an asset is associable to a document, such as a hypertext markup language (HTML) file, a Microsoft® Word® document, or a simple text file. However, some assets do not correspond to file system files. The asset may in fact be defined from the columns of a database table or the structures within an extensible markup language (XML) repository. Regardless of how they are represented physically, they all share the common purpose-defining a bound collection of related content that can be accessed, manipulated, and ultimately, translated. An asset may contain content, formatting information, and internal structural data that depends on the nature of the asset.

"Source asset" refers to the asset from which a lookup segment is drawn.

"Segment" includes a translatable chunk of content, e.g., a phrase, sentence, paragraph, etc. It represents the smallest unit of translation work. In practice, a segment can represent a paragraph, a sentence or even a sentence fragment. Segments typically are not single words, though single word segments can be used.

"Source text" refers to the text within the translation memory that corresponds to the original (source) language, which is the language being translated. The source text is compared to the lookup segment from the asset to during the match lookup process in order to find a match.

"Target text" includes the translation of the source text for a particular locale, i.e., it is one half of a translation memory (TM) unit.

"Translation memory" (abbreviated TM) includes a repository including TM entries. A TM can include TM entries for any number of locales. For example, it can contain entries for English-to-French, Greek-to-Russian, Albanian-to-Turkish, etc.

"TM unit" includes a translation pair stored in the translation memory that maps source text to target text (also known as a translation unit, TM entry, or record). It is specific for a given translation pair, which includes a source text and target text locale pair, and is usually associated with the asset whose translation produced this translation pair. In effect, a TM unit represents a previous translation, which can be reused later. In addition, each TM unit according to the invention includes a context portion that identifies the context of the related source text and target text pair. Translation units are typically bilingual, but may be also be multilingual and include metadata such as context information, use counts, creation date, etc.

"Exact match" means a source text that contains source text that is completely identical to the lookup text from the asset at the moment it comes out of a translation memory. As used herein, exact matches also include 100% matches, which are similar to exact matches, but do not necessarily result from exact matches because of differences that exist in the translation memory unit. For example, a match can be scored as 100% without having been an exact match for one of the following reasons: 1) unscored whitespace differences-using a different type of space character from that of the TM unit will prevent it from being selected as an exact match, 2) configured penalties through which certain differences between the source and lookup text are effectively ignored, or 3) segment repair through which repair heuristics can be applied to fix differences between the TM match and the original lookup text. Segment repair may be carried out by use of placeable element and auto-substitution and auto-localisation techniques, for example as described in US patent no. US 7,020,601.

"Context" means discourse that surrounds a text segment and helps to determine its interpretation. Context, as used herein, may include different levels. For example, context may include: a usage context level, an asset context level, a structural context level, and/or a segment identifier. Each different context may require different verbiage depending on the intended audience of the content.

"Usage context" refers to discourse that surrounds a segment and influences how the appropriate translation for content is derived. The usage context may be a source usage context which involves consideration of text in the source language surrounding the text to be translated. The usage context may be a target usage context which involves consideration of text in the target language surrounding a translation of the text to be translated. Typically, the usage context is defined in conjunction with surrounding content, which provides insight into the meaning of the segment to be translated. Usage context can have levels in terms of text that precedes a particular segment and text that follow (post) a particular segment, and also levels in terms of whether the context relates to text surrounding the text to be translated in the source language or in the target language. The preceding and post usage context levels can be combined with source and target usage context levels to produce further context levels in the form of preceding source usage context, preceding target usage context, post source usage context, and post target usage context levels.

"Asset context" refers to discourse relative to the asset environment in which the segment exists, i.e., background and perspective framework of the overall content in which a text segment appears.

"Structural context" refers to the document structure unit a segment appears in, such as a paragraph, heading, index entry, list, or table cell, etc.

"in-context exact (ICE) match" for a lookup segment means the source text must be an exact match and shares at least one context level with the TM unit providing the match.

"Lookup text" refers to the segment of text from the source asset for which a TM match is to be sought.

"Segment identifier" (SID) includes a label that defines the usage context in which a given segment is to be translated, and is associated with content at creation of the TM unit or content. A SID provides a context identification for the given segment. A SID may include marker tags that define segment boundaries. As described below, a SID is an alternative or an extension to basing the usage context on surrounding segments.

### II. General Overview

The present invention provides a method, system and computer software for, inter alia, determining a matching level of a plurality of source texts stored in a translation memory to a lookup segment to be translated. The invention generates high quality matches for source content from previously stored translations in a translation memory (TM). The best matches available are normally exact matches, i.e., matches where the source text is identical to one or more entries in the TM. However, a segment may be translated differently under different circumstances or contexts. The appropriateness of an exact match requires evaluation of contextual information, which can be based on the content usage (as defined by the sentences or segments surrounding it), the structural context, the asset context (which may require different verbiage depending on the intended audience) and/or other metadata such as a domain identifier, a customer name, or other information supplied by the users of the system, or automatically generated or extracted from prior translation projects.

A domain identifier may relate to the broad subject matter with which an exact match is associated such as 'electrical engineering','agriculture', or 'computer science'. Taking the word 'bank' as an example, this can be disambiguated if the domain identifier indicates a finance domain as opposed to a geographic domain.

The current invention does not replace the exact match process. Instead, it provides a new level for matching, above exact matches, thus, employing a true reuse TM system which reduces the need for manual validation and aids one in creating a TM which is as valuable as possible. In particular, one arrangement of the invention determines a matching level of a plurality of source texts stored in a translation memory to a lookup segment to be translated by determining any exact matches for the lookup segment in the plurality of source texts; and determining, in the case that at least one exact match is determined, that a respective exact match is an in-context exact (ICE) match for the lookup segment in the case that a context of the lookup segment matches that of the respective exact match. Accordingly, the ICE match determination determines the appropriateness of an exact match based on the context of the lookup segment. Those source texts that are exact matches and have a matching context are referred to as "in-context exact (ICE) matches." An ICE match is considered superior to an exact match in that it guarantees that the translation applied is appropriate for the context in which it is used. An ICE match is a translation match that guarantees a high level of appropriateness by virtue of the match having been previously translated in the same context as the segment currently being translated.

The invention leverages context information in order to: 1) determine the appropriateness of an exact match as a high quality (non-review requiring) match for new content, 2) select the best context match for a given lookup segment, and 3) guarantee that previously assigned translations for formerly translated content is always restorable. For new content, the invention leverages context information to find a high quality match from the TM based on segment usage context. The invention also ensures that the same content will always be translated the same way given its context on the asset and/or structural and/or content level.

In terms of translation of a given lookup segment, suppose a source document is translated and all segments are stored in TM. If the exact same source document is then put through a second time, the document, including all its content, will be fully matched and the resulting translated document will be exactly the same as the first translated document. This behaviour is straight forward, and expected. However, this can only be guaranteed as a result of using context information. To further understand the significance of this guarantee, consider a source document that has the same exact sentence repeated twice in two different places. Because the second usage may not have the same implied intentions as the first, it is translated differently. Now again consider an identical document being leveraged against the TM. Should the duplicated sentence have the same translation or should they differ as they did in the original document? Without taking the context of their usage into account, these sentences most likely would be translated the same by the TM. However, according to the invention, the context is considered, which guarantees that the two sentences will continue to have different translations as long as their usage context dictates such.

In terms of restoring previously translated text segments, the teaching disclosed herein also ensures that the translations of new documents will not impact the ability to restore the translation of a formerly translated document, and provides a method of ensuring that translations are perfectly repeatable by leveraging a previously translated document against TM so that it will always result in the same translations as stored by the translator. Consider again two identical documents. The first document is translated, and the results are stored in the TM. When the second document is leveraged against the same TM, the document is presented as being fully translated with ICE matches. The usage context is identical to that of the first document. Now consider that the second document is targeted for a different audience. The source language text is not changed in this example since it is deemed suitable for both audiences. However, the translation into the target language requires some alterations. The translator updates the translations for this document, and stores the results into the TM. Time passes, and copies of both translated documents are again required. For space reasons, the original translated documents were deleted. Neither of the source documents has been altered, and thus, they still contain identical source text. The teaching disclosed herein facilitates the regeneration of the original translated documents, each being identical to the originally translated documents (which themselves were not identical). Even though the content of the source documents is identical, the invention is able to leverage asset context information to ensure that the document specific translations are recoverable.

The teaching disclosed herein may be exploited as part of a content management system such as Idiom's WorldServer™, or as a separate system. WorldServer™, for example, is a Web-based application that enables enterprises to manage their content in the context of the whole globalization process while leveraging established Web architecture, content management and workflow systems. Content management systems simplify the multiple complexities arising from deploying, for example, a global Web strategy, enabling a company's Web-site to efficiently support multiple countries and also different languages, locations and cultures. They provide structures and processes to collaboration among site managers, Web developers, content owners, translators and editors, resulting in a streamlined process, a synchronized global Web strategy and a coordinated global Web team. A translator uses a content management system to see what content he or she has to translate. In WorldServer™, the translator can either export the content needing translation to a third party editing tool, or use a translation workbench to perform the actual translation. A translator can be an individual contributor, including users that are adapting but not translating content and/or reviewers who review content. Content management systems store translated phrases into TM for later recall.

### III. System Overview

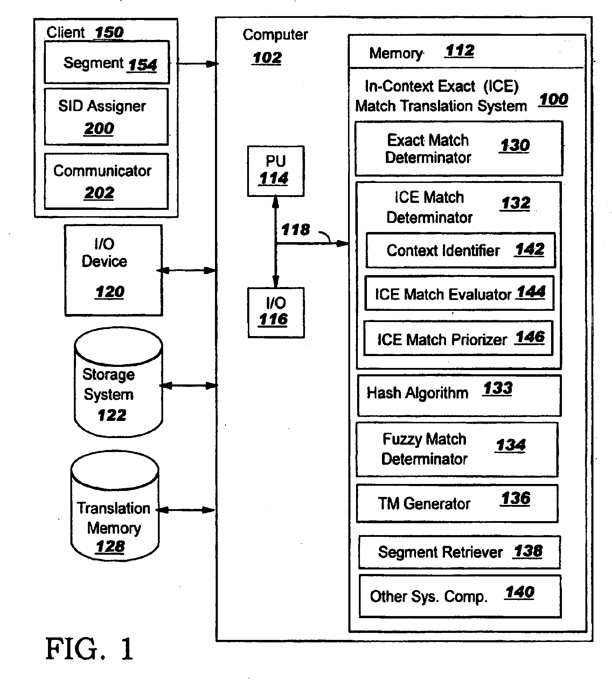

With reference to the accompanying drawings, FIG. 1 is a block diagram of an in-context exact match translation system 100 in accordance with the invention. It should be recognized that while system 100 is shown as a separate system, it may be implemented as part of a larger content management or translation system such as Idiom's WorldServer™. In this regard, description of system 100 may include certain functionality of a translation system, but omit other functionality for clarity. In addition, it should be recognized that while system 100 is shown in a client-server (e.g., Web-based) environment, other arrangements are also possible.

System 100 is shown implemented on a computer 102 as computer program code. To this extent, computer 102 is shown including a memory 112, a processing unit 114, an input/output (I/O) interface 116, and a bus 118. Further, computer 102 is shown in communication with an external I/O device/resource 120 and a storage system 122. In general, processing unit 114 executes computer program code, such as system 100, that is stored in memory 112 and/or storage system 122. While executing computer program code, processing unit 114 can read and/or write data to/from memory 112, storage system 122, and/or I/O device 120. Bus 118 provides a communication link between each of the components in computer 102, and I/O device 120 can comprise any device that enables user to interact with computer 102 (e.g., keyboard, pointing device, display, etc.).

Alternatively, a user can interact with another computing device (not shown) in communication with computer 102. In this case, I/O interface 116 can comprise any device that enables computer 102 to communicate with one or more other computing devices over a network (e.g., a network system, network adapter, I/O port, modem, etc.). The network can comprise any combination of various types of communications links. For example, the network can comprise addressable connections that may utilize any combination of wireline and/or wireless transmission methods. In this instance, the computing devices (e.g., computer 102) may utilize conventional network connectivity, such as Token Ring, Ethernet, WiFi or other conventional communications standards. Further, the network can comprise one or more of any type of network, including the Internet, a wide area network (WAN), a local area network (LAN), a virtual private network (VPN), etc. Where communications occur via the Internet, connectivity could be provided by conventional TCP/IP sockets-based protocol, and a computing device could utilize an Internet service provider to establish connectivity to the Internet.

Computer 102 is only representative of various possible combinations of hardware and software. For example, processing unit 114 may comprise a single processing unit, or be distributed across one or more processing units in one or more locations, e.g., on a client and server. Similarly, memory 112 and/or storage system 122 may reside at one or more physical locations. Memory 112 and/or storage system 122 can comprise any combination of various types of computer-readable media and/or transmission media including magnetic media, optical media, random access memory (RAM), read only memory (ROM), a data object, etc. I/O interface 116 can comprise any system for exchanging information with one or more I/O devices. Further, it is understood that one or more additional components (e.g., system software, math co-processing unit, etc.) not shown in FIG. 1 can be included in computer 102. To this extent, computer 102 can comprise any type of computing device such as a network server, a desktop computer, a laptop, a handheld device, a mobile phone, a pager, a personal data assistant, etc. However, if computer 102 comprises a handheld device or the like, it is understood that one or more I/O devices (e.g., a display) and/or storage system 122 could be contained within computer 102, not externally as shown.

As discussed further below, system 100 is shown including an exact match determinator 130, an in-context exact (ICE) match determinator 132, a hash algorithm 133, a fuzzy match determinator 134, a translation memory TM generator 136, a segment retriever 138 and other system components (Sys. Comp.) 140. ICE match determinator 134 includes a context identifier 142, an ICE match evaluator 144 and an ICE match prioritizer 146. Other system components 140 may include other functionality necessary for operation of the teaching disclosed herein, but not expressly described herein. For example, other system components 140 may include an auto-translation system and/or content management system functionality such as that provided by Idiom's WorldServer™_{.}

Although not shown for clarity in FIG. 1, it should be understood that client-side system 150 may include similar structure to computer 102, and include program code for providing functionality as described below.

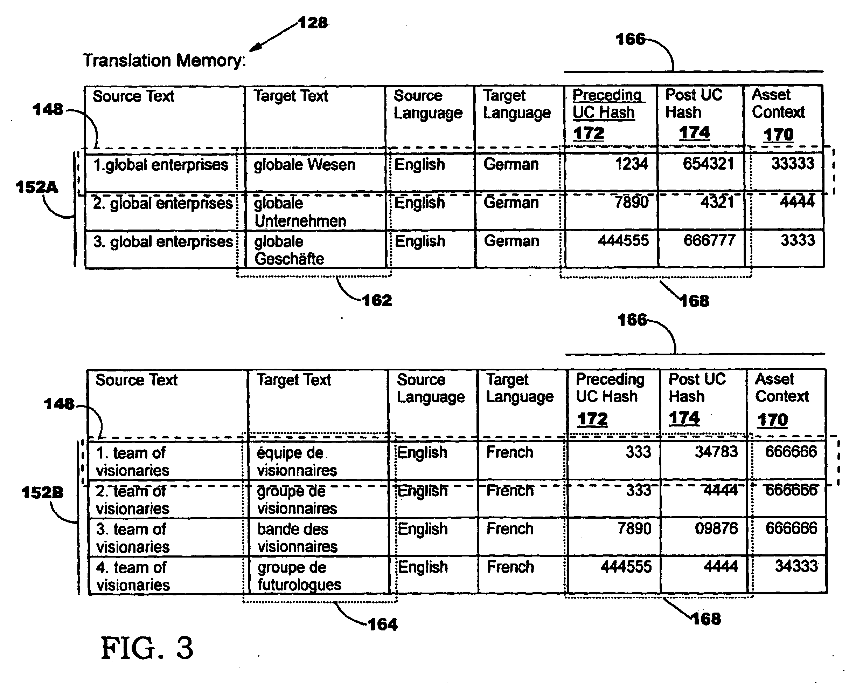

FIG. 1 also shows a translation memory 128 (hereinafter "TM 128'') for use by system 100. As shown in FIG. 3, TM 128 includes a plurality of TM entries 148 including stored target texts 162, 164 that have been previously translated into a particular language for particular source texts 152A, 152B, respectively (only two shown for brevity). For example, stored source text "global enterprises" 152A has been transcribed into a number of German translations 162, i.e., target texts, and stored source text'team of visionaries" 152B has been translated into a number of French translations 164, i.e., target texts. Each source text 152A, 152B is for comparison to a lookup segment. Each TM unit 148 also includes context identification 166 (only two labelled for clarity). In one embodiment, context identification 166 includes indications of different context levels such as a source usage context portion 168 and an asset context portion (AC) 170. Asset context portion 170 includes an asset code, e.g., "33333," that identifies a particular asset to system 100. Other context levels may also be provided such as structural context levels. In some cases, asset context portion 170 may be omitted. In this embodiment of the invention, the usage context levels are preceding and post source usage context levels. In other embodiments of the invention, the usage context levels could alternatively or additionally include preceding and/or post target usage context levels.

In one preferred arrangement, each usage context portion 168 includes a preceding source usage context (UC) hash code 172 and a post source usage context (UC) hash code 174. Preceding UC hash code 172 is generated using hash algorithm 133 based on the text stream generated by a preceding segment that the respective source text appeared next to during translation. Similarly, post UC hash code 172 is generated using hash algorithm 133 based on the text stream generated by a following (post) segment that the respective source text appeared next to during translation. Hash algorithm 133 includes any now known or later developed hash algorithm that can convert a text stream into a unique numerical identifier. (It should be recognized that the hash codes shown are simplified for clarity.) Accordingly, each UC hash code indicates a unique usage context level for the respective source text. In an alternative arrangement, only one usage context hash code may be employed for a particular source text 152, and preceding and following segments.

Where a lookup segment 154 is assigned a context at creation, context identifications 166 may be generated using a user-specified SID, as described above, rather than a hash algorithm 133 or a combination of the two, where one may be prioritised over the other.

It should be recognized that the particular codes used herein are for illustration purposes only.

### IV. Operational Methodology

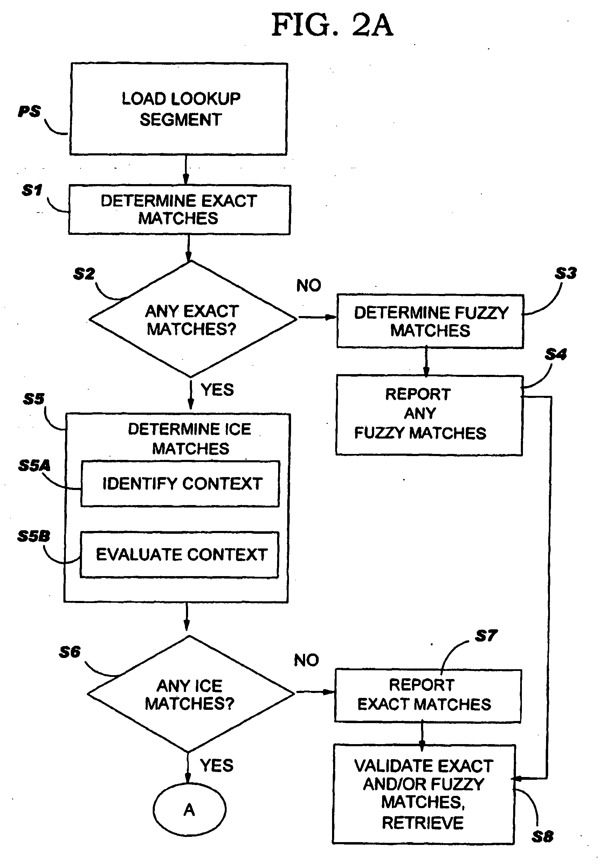

Turning to FIGS. 2A-B, a flow diagram of one embodiment of operational methodology of the invention will now be described. Discussion of FIGS. 2A-B will be made in conjunction with FIGS. 1, 3 and 4.

### A. Preliminary Steps

Starting with FIG. 2A, as a preliminary step PS, in one arrangement, a lookup segment 154 is loaded by way of client computer system 150 directly linked or linked by a network of some type, e.g. a LAN, a WAN, or the Internet, to ICE match system 100. For example, lookup segment 154 may be loaded via a translation workflow application server (not shown), e.g., Idiom's WorldServer™, which ICE match system 100 may be a part of. Lookup segment 154 may be loaded as part of a larger asset. In this case, system 100 may conduct segmentation of the larger asset in any now known or later developed fashion to create lookup segments 154, e.g., as provided by Idiom's WorldServer™. Segmentation is the process through which an asset's content is parsed and exposed as translatable segments. The size of the segment depends on segmentation rules, which may be user defined.

### B. General Methodology

The steps S1-S12 represent analysis for each lookup segment 154.

In a first step S1, any exact matches for lookup segment 154 in the plurality of source texts 152 in TM 128 is determined by exact match determinator 130. Exact match determinator 130 may function as in most conventional TM systems, which employ a string comparison algorithm to gauge the appropriateness of a translation stored within TM 128, where scores are awarded based on how closely the two strings match. A score of 100% typically indicates that an exact match has been found, or one in which differences can be automatically resolved (for example 'repaired' using placeable element, auto-localisation or auto-substitution techniques). For example, as shown in FIG. 3, lookup segment "global enterprises", when translated into German, would result in three exact matches: 1) globale Wesen, 2) globale Unternehmen, and 3) globale Geschäfte. Lookup segment'team of visionaries," when translated into French, would result in four exact matches: 1) équipe de visionnaires, 2) groupe de visionnaires, 3) bande des visionnaires, and 4) groupe de futurologues. More than one exact match may exist within TM 128 for each lookup segment 154 because multiple translations for any given segment and the meaning of a statement in a given language are not only derived from the words, but also from the context in which it is used. Accordingly, each previous translation can result in many target text translations 162, 164 for a particular source text 152, and hence, an identical lookup segment 154.

In step S2, a determination is made as to whether at least one exact match is determined, i.e., found in TM 128. If NO, at step S2, processing proceeds to step S3 at which fuzzy match determinator 134 determines whether there are any fuzzy matches for lookup segment 154 in any now known or later developed fashion. Any fuzzy matches for lookup segment 154 are reported at step S4. 'Reporting' as used herein, can mean displaying results to a user, transferring and/or storing results. Although not shown, if fuzzy matches are not found, then conventional auto-translation may be instigated.

If YES at step S2, at step S5, ICE match determinator 132 determines whether a respective exact match is an in-context exact (ICE) match for lookup segment 154. As stated above, an'2CE match'means source text 152 must be an exact match and that it also shares a common context with lookup segment 154. In other words, an exact match that has a context identification 166 that matches that of lookup segment 154 is an ICE match. In one arrangement, the context for purposes of this determination includes only a usage context. However, other context matching levels may be employed, as will be described below.

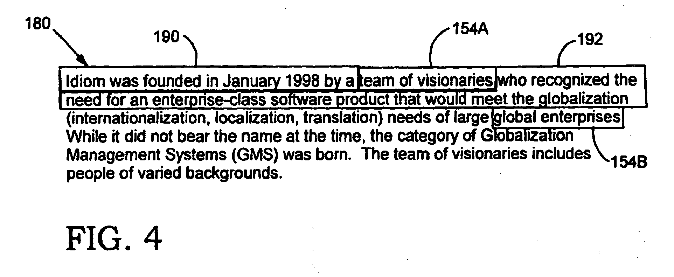

Step S5 includes two sub-steps. First, sub-step S5A, context identifier 142 identifies a context of lookup segment 154. In one arrangement, context identifier 142 identifies a context based on surrounding segments of lookup segment 154 in its source asset. In this case, hash algorithm 133 is implemented to determine a usage context for lookup segment 154 by calculating a lookup segment (LS) preceding UC hash code and a lookup segment (LS) post UC hash code. Again, hash algorithm 133 includes any now known or later developed hash algorithm that can convert a text stream into a unique numerical identifier. Referring to FIG. 4, an illustrative source asset 180 including lookup segment 154A in the form of'team of visionaries" is shown. A LS preceding UC hash code is formed based on the immediately preceding segment 190. For example, as shown in FIG. 4, a LS preceding UC hash code would be calculated for "Idiom was founded in January 1998 by a team of visionaries." Similarly, a LS post UC hash code would be calculated for the immediately following segment 192, i.e., "team of visionaries who recognized the need for an enterprise-class software product that would meet the globalization." An asset context for source asset 180 can be identified by context identifier 142 based on an asset hash, which is based on the system's identification of a particular asset, e.g., asset name, location within system, etc.

In an alternative arrangement, context identifier 142 identifies a context of lookup segment 154 according to a segment identifier (SID) associated with lookup segment 154, which as stated above, includes a label that defines the usage context in which a segment is to be translated. A SID may include marker tags that define segment boundaries. Preferably, a SID is associated with a source text 152 and/or lookup segment 154 during creation of the segment, i.e., by a content creator. However, a SID may be associated with a source text 152 and/or lookup segment 154, or overwritten at a later time, e.g., by a previous content translator.

In sub-step S5B, ICE match evaluator 144 makes an evaluation for each exact match for a lookup segment 154 by using context identification 166 stored with each candidate to determine whether it has been used in the same context as lookup segment 154, i.e., whether each exact match is an ICE match. The degree of context matching required in order for an exact match to be considered an ICE match can be pre-determined. In one arrangement, ICE match evaluator 144 indicates that a respective exact match is an ICE match for lookup segment 154 only in the case that each context level of lookup segment 154 matches that of the respective exact match. For example, where context includes a usage context level and an asset context level, the determining step may indicate that a respective exact match is an ICE match for the lookup segment only in the case that both the usage context level and the asset context level of the lookup segment matches that of the respective exact match. As a further example, where the context includes a usage context level and a structural context level, the determining step may indicate that a respective exact match is an ICE match for the lookup segment only in the case that both the usage context level and the structural context level of the lookup segment matches that of the respective exact match. The usage context level may include one or more of a preceding source usage context level, a post source usage context level, a post target usage context level, and a post target usage context level.

### EXAMPLE

Referring to FIG. 3, assume an illustrative lookup segment 154 includes the text'team of visionaries," and that it is to be translated into French. Also, assume the lookup segment "team of visionaries" has a LS preceding UC hash code of 333 and a LS post UC hash code of 4444, and an asset context of 666666. (It should be understood that all hash codes in FIG. 3 are simplified for purposes of clarity). As shown in FIG. 3, exact match determinator 130 would determine four exact matches for lookup segment "team of visionaries," when translated into French: 1) équipe de visionnaires, 2) groupe de visionnaires, 3) bande des visionnaires, and 4) groupe de futurologues. ICE match evaluator 144 reviews the exact matches, and as shown in FIG. 3, would determine that when lookup segment "team of visionaries" is translated into French, the source text"groupe de visionnaires" has the same context because it has the same asset context 170 and usage context (hash codes) 172, 174. Accordingly, "groupe de visionnaires" would be an ICE match. The other source texts would not qualify as ICE matches because they do not have at least one context code of lookup segment'team of visionaries."

In an alternative arrangement, ICE match evaluator 144 may indicate that a respective exact match is an ICE match for lookup segment 154 even if only some context levels of the lookup segment matches that of the respective exact match.

### EXAMPLE

Referring to FIG. 3, assume an illustrative lookup segment 154 includes the text "global enterprises," and that it is to be translated into German. Also, assume the lookup segment "global enterprises" has a LS preceding UC hash code of 1234 and a LS post UC hash code of 4321, and an asset context of 7890. As shown in FIG. 3, exact match determinator 130 would determine three exact matches for lookup segment "global enterprises, "when translated into German: 1) globale Wesen, 2) globale Unternehmen, and 3) globale Geschäfte. Assuming that only one usage context level is required for an exact match to be an ICE match, ICE match evaluator 144 reviews the exact matches, and as shown in FIG. 3, would determine that when lookup segment "global enterprise" is translated into German, the source texts "globale Wesen" and "globale Unternehmen" have the same context because they each have one UC hash code that matches one of LS UC hash codes. That is, "globale Wesen" has the same previous (preceding) source UC hash code as the lookup segment, and "globale Unternehmen" has the same post source UC hash code as the lookup segment. The other source texts would not qualify as ICE matches because they do not have at least one context level of lookup segment'global enterprises." Details of how system 100 prioritizes multiple ICE matches will be described below.

If no ICE matches are determined, i.e., NO at step S6, at step S7, any exact matches are reported. Subsequently, at step S8, exact matches and fuzzy matches, i.e., from step S3-4, can be validated by a user in any now known or later developed fashion. In this case, exact matches and fuzzy matches are retrieved to their respective caches, and are made available to the translator by means of a client computer system 150 where the translator must validate each exact match in order to ensure that such match is the best match given the source asset 180 content and update each fuzzy match in order to match the source asset 180 content.

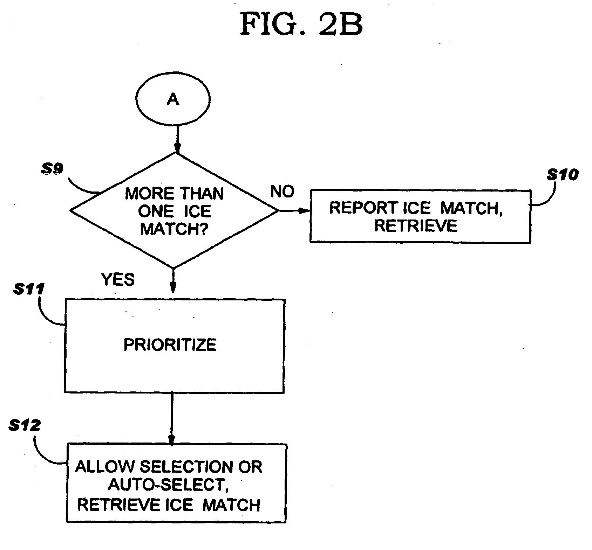

If ICE matches are determined, i.e., YES at step S6, then as shown in FIG. 2B, at step S9, ICE match prioritizer 146 determines whether more than one ICE match is found. If only one ICE match is determined, then at step S10, the single ICE match is reported. Once an ICE match is automatically reported, system 100 allows retrieval of the target text 162, 164 via segment retriever 138.

Some arrangements of the current disclosure relate to improving disambiguation of ICE matches using structural context levels. Consider the following first example involving structural context levels:
Source1 (s1) - structural context = heading text: "Print the document.'
Target1 (t1) - structural context = heading text: "Das Dokument ausdrucken.'
In this case, in a heading structural context (the same for both source and target segments in a translation unit), the German translation uses an infinitive (non-imperative) form in the translation.

Now, considering the following second example involving structural context levels where further down in the same document, the same English sentence is used, however this time in an instruction list so an imperative form is required in German:
Source2 (s2) - structural context = instruction list: Print the document.'
Target2 (t2): - structural context = instruction list: Drucken Sie das Dokument aus.'
If the above exemplary sentences are stored in a translation memory or other such data store, then not only will the different translations be stored in the translation memory, but also their structural context (i.e. heading vs. instruction list). Subsequently, whenever the same sentence appears in the same structural context, the appropriate translation for the current structural context can be preferentially proposed.
Structural context levels can be used alternatively, or in addition to usage context levels (preceding, post, source and/or target) and/or asset context levels.

### C. Multiple ICE Match Prioritization

Returning to FIG. 2B, step S11-12 represent optional steps for addressing the situation in which multiple ICE matches are determined in step S5, i.e., YES at step S9. In one arrangement (not shown), ICE match determinator 132 may simply allow a user to select an ICE match from a list of ICE matches. However, this is not preferred because it defeats one purpose of the ICE matches, i.e., not having to validate an exact match. In the preferred embodiment shown in FIG. 2B, if more than one ICE match is determined, then ICE match prioritizer 146 prioritizes (ranks) each ICE match according to a degree of context matching at step S11. As described above, the "degree of context matching" can be predetermined. This step prioritizes each ICE matches degree of context matching and either presents the ICE matches to a user for selection or automatically selects the highest ranked ICE match, at step S12. It should be understood that various formulae for prioritizing multiple ICE matches are possible depending on the number of context levels. As an alternative or addition to one or more fixed formulae, an optimal (or otherwise acceptable) prioritisation can be arrived at via a learning process where observed results from a given training corpora or output from a previous translation project or portion of a live translation project over a predetermined period are used to tune the prioritisation of different context levels.

The following example illustrates one arrangement for prioritizing multiple ICE matches.

### EXAMPLE

Assume the context includes a usage context level and an asset context level, and the lookup segment "team of visionaries" is to be translated into French using TM 128 of FIG. 3 based on a source document 180, as shown in FIG. 4. In this case, "team of visionaries" has four exact matches: 1) équipe de visionnaires, 2) groupe de visionnaires, 3) bande des visionnaires, and 4) groupe de futurologues, based on previously stored translations. Assume also that lookup segment "team of visionaries" has an LS previous source UC hash code 333, an LS post source UC hash code 4444 and an asset code 666666. Assume also that for an exact match to be indicated by ICE match determinator 132 as an ICE match, only one context level needs to match that of the lookup segment. In this case, each exact match is an ICE match. In particular, 1) "équipe de visionnaires" has matching previous source UC hash code and asset code, 2) "groupe de visionnaires" has all matching context levels, 3)"bande des visionnaires" has a matching asset code, and 4) "groupe de futurologues" has a matching post source UC hash code.

It should be recognized that, by definition, ICE matches are prioritized above unmatched lookup segments (i.e., those that require manual or machine translation), fuzzy matches, and exact matches that are not ICE matches. One prioritization rubric for ICE matches is shown below. In this rubric, rankings are listed in reverse order of precedence (i.e., the higher the number, the higher the prioritization): wherein the usage context (UC) level includes a preceding UC level and a post UC level, and the some exemplary prioritizing steps includes:
1. Source Usage Context (UC), Target UC) and Structural Context Matches are Preferred over Source and Target Usage Context (UC) Matches:
   Preference is given to an ICE match that has both the same source and target UC hash codes as well as the same structural context match as the lookup segment over an ICE match which only has the same source and target UC hash codes as the lookup segment.
2. Source UC and Target UC Matches are Preferred over Source Only UC Matches:
   Preference is given to an ICE match that has both the same source and target UC hash codes as the lookup segment over an ICE match which only has the same source UC hash code as the lookup segment.
3. Preceding UC Matches are Preferred over Post UC Matches:
   Preference is given to an ICE match having either a preceding source usage context level or a preceding target usage context level that matches that of the lookup segment over an ICE match having only either a post source usage context level or a post target usage context level matching that of the lookup segment.
4. Full Source Usage Context (UC) Matches are Preferred Over Partial Source Usage Context (UC) Matches:
   Assuming that exact matches that have only one source UC hash code that match a hash code of the lookup segment are considered ICE matches (referred to as "partial matches), preference is given to those ICE matches that have both the same previous and post source UC hash codes as the lookup segment (referred to as "full Source UC matches") over the partial matches. In other words, an ICE match having both previous and post source UC levels that match those of the lookup segment are preferred over an ICE match having only one of the previous and post source UC levels matching those of the lookup segment. For the example, ICE match 2) "groupe de visionnaires" would be preferred over all others because it has matching preceding (333) and post (4444) UC hash codes with the lookup segment.
   Similarly, prioritisation can be given to full target UC matches over partial target UC matches.
5. ICE Matches from Same Asset as Lookup Segment are Preferred Over Those from other Assets:
   In this case, two or more ICE matches cannot be differentiated by the above-described full-over-partial matching preference, i.e., the first preference is non-conclusive, a preference is given to the ICE match that is from the same asset as the lookup segment based on the asset code. In other words, where the first preference is non-conclusive, an ICE match from the same asset as the lookup segment is preferred over an ICE match from a different asset. In the example, ICE matches 1) "équipe de visionnaires" and 4) "groupe de futurologues" are both partial ICE matches, but ICE match 1) "équipe de visionnaires" is from the same asset "666666" as the lookup segment, and would be preferred.
6. Where Two or More ICE Matches from the Same Asset are Determined for a Lookup Segment, the ICE Match with a Closer Position to the Position of Lookup Segment within the Asset is Preferred:
   This prioritization addresses the situation in which a lookup segment 154 exists in numerous locations within a single source asset 180, and as a result two or more ICE matches exist for a particular asset. For example, FIG. 4 shows source asset 180 including two occurrences of lookup segment "team of visionaries" 154A, 154B. In this case, ICE match prioritizer 146 evaluates the position within the asset of the particular lookup segment and will prefer the ICE match that is closest in position within the asset to the lookup segment over the other ICE matches from the same asset. In other words, where the second preference is non-conclusive, an ICE match with a closest position to a position of the lookup segment within the asset is preferred over the other ICE matches. This evaluation of position can be repeated for any number of repetitions of a lookup segment within a particular asset.

Prioritization can therefore involve first looking at matching of source and target usage context levels in combination with structural context levels in order to disambiguate multiple ICE matches. If this first step is not sufficient to disambiguate between the ICE matches, then matching of both source and target usage context levels as opposed to only matching source context levels can be used. Preceding as opposed to post usage context levels can be used next, followed by full source or target usage contexts as opposed to partial source or target usage contexts. If the above steps fail to disambiguate between multiple ICE matches, then asset context levels may be used. If this is still insufficient for disambiguation, then the position of the lookup segment can be used.

Asset metadata can be used in the prioritization of multiple ICE matches for disambiguation purposes, in any combination and/or preference order with the above or similar steps. Similarly, when disambiguating fuzzy matches, different prioritization methods and preference orders from the above or similar steps may be employed.

The above prioritization steps and ordering of steps are given for exemplary purposes and different combinations and orders of prioritization steps may be employed.

Once the prioritization is complete, at step S12, ICE match prioritizer 146 allows a user to select the ICE match based on the rank in any now known or later developed fashion, e.g., via a graphical user interface of client computer system 150, or automatically selects the highest prioritized ICE match. Once an ICE match is selected, system 100 allows retrieval of at least one target text 162, 164 via segment retriever 138.

Because of the high-level match quality provided by an ICE match, source texts that are determined to be ICE matches do not need to be reviewed or validated by the translator. They can be automatically accepted, thus decreasing the translation cycle time and resulting in cheaper translation costs. In addition, system 100 addresses the situation in which a plurality of lookup segments 154 that are substantially identical in terms of content are present in a single source asset 180. In this case, system 100 is capable of determining an ICE match for each lookup segment 154 based on a matching level. Typically, at least one lookup segment has a different ICE match than at least one other lookup segment to assist in this determination. If not, multiple ICE matches can be reported to a user for selection, as described above. System 100 also facilitates the translation of sections of content, which are repeated across different assets with minimal effort, including without limitation retrieving matches even when segments of content have been split or merged and/or allowing content blocks to be translated differently within a single asset.

The above-described operation can continue to process further lookup segments of source asset 180 against TM 128, or provide output to a user once an entire asset is completed.

### D. Target usage context levels

The arrangements and embodiments of the invention described above primarily include usage context levels which are source usage context levels, i.e. usage contexts associated with text surrounding the text to be translated in the source language. However, according to the invention usage context levels which are target usage context levels are used, i.e. usage contexts associated with text surrounding a translation of the text to be translated in the target language.

Consider a current segment g, with source s(g) and translation t(g), with t(g) being the desired translation of the lookup segment. If a translation memory contains multiple exact matches t*(g) for the source s(g), then the usage context of the lookup segment can be considered in order to disambiguate between the multiple exact matches, i.e. the usage context is used in order to select the translation t(g) in t*(g) which fits best in the current usage context. If the (bilingual) segment preceding the segment is segment f, with s(f) being the source of the preceding segment, and t(f) being the target of the preceding segment, and the segment following (post) the current segment is segment h, with source s(h) and translation t(h).

So, according to embodiments of the invention described above, preceding and post source usage context levels, s(f) and s(h) respectively, are used to disambiguate between the translations t*(g). However, other embodiments of the invention alternatively, or in addition, use target source usage context levels, i.e. preceding and/or post target context levels, t(f) and, if available, t(h) respectively, can be used to disambiguate between the translations t*(g).

The above difference between disambiguation using source usage context levels and target usage context levels is now described by way of an example.

If a document contains three segments in the form of the following three sentences:
The cat sleeps. It is cute. It purrs.

Then, assuming translation of the second segment into German is desired, i.e. "It is cute." into German, and it is further assumed that the translation for the first segment is already known ("Die Katze schläft."), then disambiguation among potential translations t*(g) = { "Sie ist niedlich.", "Er ist niedlich.", "Es ist niedlich." } according to source usage context only could be based on the two segments surrounding the segment being translated in the source language, namely the preceding segment s(f) = "The cat sleeps." and the post segment s(h) = "It purrs."

In contrast, disambiguation among potential translations t*(g) = { "Sie ist niedlich.", "Er ist niedlich.", "Es ist niedlich." } according to a combination of source and target usage context levels could be based on the segment preceding the segment being translated in the source language s(f) = "The cat sleeps." and also the segment preceding the segment being translated in the target language t(f) = "Die Katze schläft.".

In many situations, using a combination of target and source usage context disambiguation can provide improved results over disambiguation on the basis of source usage context alone. In other arrangements, target usage contexts can be used and not source usage contexts.

Note that in the above, t(h) is primarily includes for the sake of completeness. In reality, the translation of the following segment is not often known and therefore cannot be used for disambiguation as translators typically work sequentially through a document, so t(h) would in general not be available until the following segment has been translated.

### E. Generating the Translation Memory

The existence of context information for TM entries is required for system 100 operation. As such, implementation of the invention requires storage of context information with every new translation added to the TM. This allows the context information of lookup segments to be effectively compared to the context information of previously translated segments without requiring access to the previously translated documents.

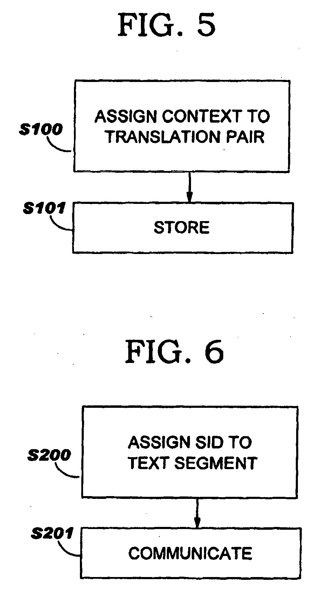

Toward this end, in another arrangement, the teaching set out herein provides a way through which the context information is stored along with each translation when translations are saved into TM 128, thus, not requiring a translator to keep any files around, such as the previously translated documents, for the invention to function. Turning to FIG. 5, the invention also includes a method of storing a translation pair of source text and target text in TM 128. In a first step S100, a context is assigned to the translation pair using TM generator 136. Context may be assigned, for example, by implementation of the above-described SIDs during creation of content or via operation of hash algorithm 133 during a translation pass. Next, in step S101, the context is stored with the translation pair in TM 128 by TM generator 136. As described above, the context may include one or more of a usage context level (any combination of preceding, post, source, target), a structural context level and an asset context level.

It should be recognized that the above-described TM generation may also be implemented on a client-side system 150 for when an asset (segment) is created. In this embodiment, the invention includes a client-side system 150 for interacting with a translation system (i.e., system 100 along with other content management system components 140) including TM 128. Turning to FIGS. 1 and 6, in this case, the client-side system 150 may operate by providing a SID assigner 200 for assigning (step S200) a segment identifier (SID) to a segment 152 to be translated by TM 128, the SID indicating a usage context of the segment. SID assigner 200 may allow a user to associate predetermined SIDs or SIDs may be generated using, for example, a hash algorithm 133. In addition, system 150 may include a communicator 202 for communicating (step S201) the SID assignment for storage as part of TM 128, e.g., by TM generator 136 of system 100.

### V. Conclusion

The above-described invention provides value for translators by giving them the ability to perfectly match source content with that of the TM, alleviating the need to validate the source content with the TM and creating a truly reusable TM system, which allows for a more efficient translation process.

It is understood that the order of the above-described steps is only illustrative. To this extent, one or more steps can be performed in parallel, in a different order, at a remote time, etc. Further, one or more of the steps may not be performed in various arrangements of the invention.

It is understood that the present invention can be realized in hardware, software, a propagated signal, or any combination thereof, and may be compartmentalized other than as shown. Any kind of computer/server system(s) or other apparatus adapted for carrying out the methods described herein is suitable. A typical combination of hardware and software could be a general purpose computer system with a computer program that, when loaded and executed, carries out the respective methods described herein. Alternatively, a specific use computer, containing specialized hardware for carrying out one or more of the functional tasks of the invention (e.g., system 100), could be utilized. The present invention also can be embedded in a computer program product or a propagated signal, which comprises all the respective features enabling the implementation of the methods described herein, and which when loaded in a computer system is able to carry out these methods. Computer program, propagated signal, software program, program, or software, in the present context mean any expression, in any language, code or notation, of a set of instructions intended to cause a system having an information processing capability to perform a particular function either directly or after either or both of the following: (a) conversion to another language, code or notation; and/or (b) reproduction in a different material form. Furthermore, it should be appreciated that the teachings of the present invention could be offered as a business method on a subscription or fee basis. For example, the system and/or computer could be created, maintained, supported and/or deployed by a service provider that offers the functions described herein for customers. That is, a service provider could offer the functionality described above.

The invention may be embodied in other specific forms without departing from the essential characteristics thereof. It is to be understood that the above-described embodiments are simply illustrative and not restrictive of the principles of the invention. Various and other modifications and changes may be made by those skilled in the art which will embody the principles of the invention and fall within the scope thereof and all changes which come within the meaning and range of the equivalency of the claims are thus intended to be embraced therein.

## Claims

1. A method of determining a matching level of a plurality of source texts (152A-B) stored in a translation memory (128) to a lookup segment (154A-B) to be translated, the method comprising the steps of:
determining (S1) any exact matches for the lookup segment (154A-B) in the plurality of source texts (152A-B); and
determining (S5), in the case that at least one exact match is determined, that a respective exact match is an in-context exact, ICE, match for the lookup segment (154A-B) in the case that a context of the lookup segment (154A-B) matches that of the respective exact match;
wherein, in the case that greater than one ICE match is determined, the ICE match determining includes prioritizing (S11) each ICE match according to a degree of context matching in order that a more appropriate ICE match may be preferred over one or more other ICE matches; and
wherein the context includes at least two levels
**characterized in that**
said at least two levels comprise a source usage context level and a target usage context level;
said target usage context level comprises a preceding target usage context level and/or a post target usage context level; and
an ICE match with a target usage context level matching that of the lookup segment (154A-B) is attributed a higher degree of context matching than an ICE match with only a source usage context level matching that of the lookup segment (152A-B).

2. A method according to claim 1, wherein an ICE match with both source and target usage context levels matching those of the lookup segment (154A-B) is attributed a higher degree of context matching than an ICE match with only a source usage context level matching that of the lookup segment (154A-B).

3. A method according to claim 1 or 2, wherein the source usage context level comprises a preceding source usage context level.

4. A method according to claim 1, 2 or 3, wherein the source usage context level comprises a post source usage context level.

5. A method according to any preceding claim, wherein said at least two levels further comprise a structural context level.

6. A method according to any preceding claim, wherein the source usage context level comprises a preceding source usage context level and the target context usage level comprises the preceding target usage context level, and
wherein an ICE match with a preceding source and/or preceding target usage context level matching that of the lookup segment (154A-B) is attributed a higher degree of context matching than an ICE match with only a structural context level matching that of the lookup segment (154A-B).

7. A method according to any preceding claim, wherein the ICE match determining step indicates that a respective exact match is an ICE match for the lookup segment (154A-B) only in the case that two or more context levels of the lookup segment (154A-B) match that of the respective exact match.

8. A method according to any preceding claim, wherein the ICE match determining step indicates that a respective exact match is an ICE match for the lookup segment (154A-B) only in the case that at least one usage context level and a structural context level of the lookup segment match that of the respective exact match.

9. A method according to claim 8, wherein the at least one usage context level comprises the preceding target usage context level.

10. A method according to claim 8, wherein the at least one usage context level comprises a preceding source usage context level.

11. A method according to any preceding claim, wherein the prioritizing (S11) includes:
first preferring an ICE match having source and target usage context levels and a structural context level matching those of the lookup segment (154A-B),
where the first preferring step is non-conclusive, second preferring an ICE match having source and target usage context levels matching those of the lookup segment (154A-B),
where the second preferring step is non-conclusive, third preferring an ICE match having either a preceding source usage context level or the preceding target usage context level that matches that of the lookup segment (154A-B) over an ICE match having only either a post source usage context level or the post target usage context level matching that of the lookup segment (154A-B),
where the third preferring step is non-conclusive, fourth preferring an ICE match having any usage context level matching that of the lookup segment (154A-B) over an ICE match having only a structural context level matching that of the lookup segment (154A-B),
where the fourth preferring step is non-conclusive, fifth preferring an ICE match having a structural context level matching that of the lookup segment (154A-B) over an ICE match having a different structural context level from that of the lookup segment (154A-B),
where the fifth preferring step is non-conclusive, sixth preferring an ICE match with a closest position to the position of the lookup segment within the asset.

12. A system for determining a matching level of a plurality of source texts (152A-B) stored in a translation memory (128) to a lookup segment (154A-B) to be translated, the system comprising:
means for determining (S1) any exact matches for the lookup segment (154A-B) in the plurality of source texts (152A-B); and
means for determining (S5), in the case that at least one exact match is determined, that a respective exact match is an in-context exact (ICE) match for the lookup segment (154A-B) in the case that a context of the lookup segment (154A-B) matches that of the respective exact match,
wherein, in the case that greater than one ICE match is determined, the ICE match determining includes prioritizing (S11) each ICE match according to a degree of context matching in order that a more appropriate ICE match may be preferred over one or more other ICE matches; and
wherein the context includes at least two levels
**characterized in that**
said at least two levels comprise a source usage context level and a target usage context level;
said target usage context level comprises a preceding target usage context level and/or a post target usage context level; and
an ICE match with a target usage context level matching that of the lookup segment (154A-B) is attributed a higher degree of context matching than an ICE match with only a source usage context level matching that of the lookup segment (152A-B).

13. Computer software adapted to perform the method of claim 1.

## Patentansprüche

1. Verfahren zum Bestimmen einer Übereinstimmungsstufe für eine Vielzahl von Quelltexten (152A-B), die in einem Übersetzungsspeicher (128) mit einem zu übersetzenden Suchsegment (154A-B) gespeichert sind, wobei das Verfahren die Schritte umfasst:
Bestimmen (S1) jeglicher exakter Übereinstimmungen für das Suchsegment (154A-B) in der Vielzahl der Quelltexte (152A-B); und
falls wenigstens eine exakte Übereinstimmung bestimmt wird, Bestimmen (S5), dass eine entsprechende exakte Übereinstimmung eine kontextabhängige exakte Übereinstimmung, ICE, für das Suchsegment (154AB) ist, im Falle, dass ein Kontext des Suchsegments (154A-B) mit dem der entsprechenden exakten Übereinstimmung übereinstimmt;
wobei, falls mehr als eine ICE Übereinstimmung bestimmt wird, die Bestimmung der ICE Übereinstimmung Priorisieren (S11) jeder ICE Übereinstimmung gemäß eines Kontextübereinstimmungsgrades umfasst, so dass eine passendere ICE Übereinstimmung gegenüber einer oder mehrerer anderer ICE Übereinstimmungen bevorzugt werden kann; und
wobei der Kontext wenigstens zwei Stufen umfasst
**dadurch gekennzeichnet, dass**
die wenigstens zwei Stufen eine Quellverwendungskontextstufe und eine Zielverwendungskontextstufe umfassen;
die Zielverwendungskontextstufe eine vorangehende Zielverwendungskontextstufe und/oder eine nachfolgende Zielverwendungskontextstufe umfasst; und
einer ICE Übereinstimmung mit einer Zielverwendungskontextstufe, die mit der des Suchsegments (154A-B) übereinstimmt, ein höherer Grad an Kontextübereinstimmung beigemessen wird, als einer ICE Übereinstimmung mit nur einer mit der des Suchsegments (152A-B) übereinstimmenden Quellverwendungskontextstufe.

2. Verfahren nach Anspruch 1, wobei eine ICE Übereinstimmung, bei der sowohl die Quell- als auch die Zielverwendungskontextstufe mit denen des Suchsegments (154A-B) übereinstimmen, ein höherer Grad an Kontextübereinstimmung beigemessen wird, als einer ICE Übereinstimmung mit nur einer mit der des Suchsegments (154A-B) übereinstimmenden Quellverwendungskontextstufe.

3. Verfahren nach Anspruch 1 oder 2, wobei die Quellverwendungskontextstufe eine vorangehende Quellverwendungskontextstufe umfasst.

4. Verfahren nach Anspruch 1, 2 oder 3, wobei die Quellverwendungskontextstufe eine nachfolgende Quellverwendungskontextstufe umfasst.

5. Verfahren nach einem der vorherigen Ansprüche, wobei die wenigstens zwei Stufen des Weiteren eine strukturelle Kontextstufe umfassen.

6. Verfahren nach einem der vorherigen Ansprüche, wobei die Quellverwendungskontextstufe eine vorangehende Quellverwendungskontextstufe umfasst und die Zielverwendungskontextstufe die vorangehende Zielverwendungskontextstufe umfasst, und
wobei einer ICE Übereinstimmung mit einer vorangehenden Quell- und/oder vorangehenden Zielverwendungskontextstufe, die mit der bzw. den des Suchsegments (154A-B) übereinstimmt bzw. übereinstimmen, ein höherer Grad an Kontextübereinstimmung beigemessen wird, als einer ICE Übereinstimmung mit nur einer mit der des Suchsegments (154A-B) übereinstimmenden strukturellen Kontextstufe.

7. Verfahren nach einem der vorherigen Ansprüche, wobei der Bestimmungsschritt der ICE Übereinstimmung nur angibt, dass eine entsprechende exakte Übereinstimmung eine ICE Übereinstimmung für das Suchsegment (154A-B) ist, falls zwei oder mehr Kontextstufen des Suchsegments (154A-B) mit denen der entsprechenden exakten Übereinstimmung übereinstimmen.

8. Verfahren nach einem der vorherigen Ansprüche, wobei der Bestimmungsschritt der ICE Übereinstimmung nur angibt, dass eine entsprechende exakte Übereinstimmung eine ICE Übereinstimmung für das Suchsegment (154A-B) ist, falls wenigstens eine Verwendungskontextstufe und eine strukturelle Kontextstufe des Suchsegments mit denen der entsprechenden exakten Übereinstimmung übereinstimmen.

9. Verfahren nach Anspruch 8, wobei die wenigstens eine Verwendungskontextstufe eine vorangehende Zielverwendungskontextstufe umfasst.

10. Verfahren nach Anspruch 8, wobei die wenigstens eine Verwendungskontextstufe eine vorangehende Quellverwendungskontextstufe umfasst.

11. Verfahren nach einem der vorherigen Ansprüche, wobei das Priorisieren (S11) umfasst:
erstens bevorzugen einer ICE Übereinstimmung mit Quell- und Zielverwendungskontextstufen und einer strukturellen Kontextstufe, die mit denen des Suchsegments (154A-B) übereinstimmen,
falls der erste Bevorzugungsschritt nicht eindeutig ist, zweitens bevorzugen einer ICE Übereinstimmung mit Quell- und Zielverwendungskontextstufen, die mit denen des Suchsegments (154A-B) übereinstimmen,
falls der zweite Bevorzugungsschritt nicht eindeutig ist, drittens bevorzugen einer ICE Übereinstimmung mit entweder einer vorangehenden Quellverwendungskontextstufe oder der vorangehenden Zielverwendungskontextstufe, die mit der des Suchsegments (154A-B) übereinstimmt, gegenüber einer ICE Übereinstimmung, die entweder nur eine nachfolgende Quellverwendungskontextstufe oder die nachfolgende Zielverwendungskontextstufe aufweist, die mit der des Suchsegments (154A-B) übereinstimmt,
falls der dritte Bevorzugungsschritt nicht eindeutig ist, viertens bevorzugen einer ICE Übereinstimmung mit einer beliebigen mit der des Suchsegments (154A-B) übereinstimmenden Verwendungskontextstufe gegenüber einer ICE Übereinstimmung mit nur einer mit der des Suchsegments (154A-B) übereinstimmenden strukturellen Kontextstufe,
falls der vierte Bevorzugungsschritt nicht eindeutig ist, fünftens bevorzugen einer ICE Übereinstimmung mit einer mit der des Suchsegments (154A-B) übereinstimmenden strukturellen Kontextstufe gegenüber einer ICE Übereinstimmung mit einer sich von denen des Suchsegments (154A-B) unterscheidenden strukturellen Kontextstufe,
falls der fünfte Bevorzugungsschritt nicht eindeutig ist, sechstens bevorzugen einer ICE Übereinstimmung mit einer zu der Position des Suchsegments innerhalb des Bestands nächstgelegensten Position.

12. Vorrichtung zum Bestimmen einer Übereinstimmungsstufe für eine Vielzahl von Quelltexten (152A-B), die mit einem zu übersetzenden Suchsegment (154A-B) in einem Übersetzungsspeicher (128) gespeichert sind, die Vorrichtung umfasst:
Mittel zum Bestimmen (S11) jeglicher exakter Übereinstimmungen für das Suchsegment (154A-B) in der Vielzahl der Quelltexte (152A-B); und
Mittel zum Bestimmen (S5), falls wenigstens eine exakte Übereinstimmung bestimmt wird, dass eine entsprechende exakte Übereinstimmung eine kontextabhängige exakte Übereinstimmung (ICE) für das Suchsegment (154A-B) ist, im Falle, dass ein Kontext des Suchsegments (154A-B) mit dem der entsprechenden exakten Übereinstimmung übereinstimmt;
wobei, falls mehr als eine ICE Übereinstimmung bestimmt wird, die Bestimmung der ICE Übereinstimmung Priorisieren (S11) jeder ICE Übereinstimmung gemäß eines Kontextübereinstimmungsgrades umfasst, so dass eine passendere ICE Übereinstimmung gegenüber einer oder mehrerer anderer ICE Übereinstimmungen bevorzugt werden kann; und
wobei der Kontext wenigstens zwei Stufen umfasst
**dadurch gekennzeichnet, dass**
die wenigstens zwei Stufen eine Quellverwendungskontextstufe und eine Zielverwendungskontextstufe umfassen;
die Zielverwendungskontextstufe eine vorangehende Zielverwendungskontextstufe und/oder eine nachfolgende Zielverwendungskontextstufe umfasst; und
eine ICE Übereinstimmung mit einer Zielverwendungskontextstufe, die mit der des Suchsegments (154A-B) übereinstimmt, ein höherer Grad an Kontextübereinstimmung beigemessen wird, als einer ICE Übereinstimmung mit nur einer Quellverwendungskontextstufe, die mit der des Suchsegments (152AB) übereinstimmt.

13. Computersoftware, die angepasst ist, das Verfahren nach Anspruch 1 auszuführen.

## Revendications

1. Procédé de détermination d'un niveau de correspondance d'une pluralité de textes sources (152A-B) mémorisés dans une mémoire de traduction (128) d'un segment de consultation (154A-B) devant être traduit, le procédé comprenant les étapes consistant à :
déterminer (S1) toutes les correspondances exactes pour le segment de consultation (154A-B) dans la pluralité de textes sources (152A-B), et
déterminer (S5), dans le cas où au moins une correspondance exacte est déterminée, qu'une correspondance exacte respective est une correspondance exacte en contexte ICE pour le segment de consultation (154A-B) dans le cas où un contexte du segment de consultation (154A-B) correspond à celui de la correspondance exacte respective,
dans lequel, dans le cas où plus d'une correspondance ICE est déterminée, la détermination de la correspondance ICE comprend l'affectation d'une priorité (S11) à chaque correspondance ICE selon un degré de correspondance de contexte de sorte qu'une correspondance ICE plus appropriée puisse être préférée par rapport à une ou plusieurs autres correspondances ICE, et
dans lequel le contexte comprend au moins deux niveaux
**caractérisé en ce que**
lesdits au moins deux niveaux comprennent un niveau de contexte d'utilisation source et un niveau de contexte d'utilisation cible,
ledit niveau de contexte d'utilisation cible comprend un niveau de contexte d'utilisation cible précédent et/ou un niveau de contexte d'utilisation cible suivant, et
une correspondance ICE ayant un niveau de contexte d'utilisation cible correspondant à celui du segment de consultation (154A-B) se voit attribuer un degré de correspondance de contexte supérieur à celui d'une correspondance ICE ayant seulement un niveau de contexte d'utilisation source correspondant à celui du segment de consultation (152A-B).

2. Procédé selon la revendication 1, dans lequel une correspondance ICE ayant à la fois les niveaux de contexte d'utilisation source et cible qui correspondent à ceux du segment de consultation (154A-B) se voit attribuer un degré de correspondance de contexte supérieur à celui d'une correspondance ICE ayant seulement un niveau de contexte d'utilisation source correspondant à celui du segment de consultation (154A-B).

3. Procédé selon la revendication 1 ou 2, dans lequel le niveau de contexte d'utilisation source comprend un niveau de contexte d'utilisation source précédent.

4. Procédé selon la revendication 1, 2 ou 3, dans lequel le niveau de contexte d'utilisation source comprend un niveau de contexte d'utilisation source suivant.

5. Procédé selon l'une quelconque des revendications précédentes, dans lequel lesdits au moins deux niveaux comprennent en outre un niveau de contexte structurel.

6. Procédé selon l'une quelconque des revendications précédentes, dans lequel le niveau de contexte d'utilisation source comprend un niveau de contexte d'utilisation source précédent et le niveau de contexte d'utilisation cible comprend le niveau de contexte d'utilisation cible précédent, et
dans lequel une correspondance ICE ayant un niveau de contexte d'utilisation source précédent et/ou cible précédent correspondant à celui du segment de consultation (154A-B) se voit attribuer un degré de correspondance de contexte supérieur à celui d'une correspondance ICE ayant seulement un niveau de contexte structurel correspondant à celui du segment de consultation (154A-B).

7. Procédé selon l'une quelconque des revendications précédentes, dans lequel l'étape de détermination de la correspondance ICE indique qu'une correspondance exacte respective est une correspondance ICE pour le segment de consultation (154A-B) seulement dans le cas où deux niveaux de contexte ou plus du segment de consultation (154A-B) correspondent à ceux de la correspondance exacte respective.

8. Procédé selon l'une quelconque des revendications précédentes, dans lequel l'étape de détermination de la correspondance ICE indique qu'une correspondance exacte respective est une correspondance ICE pour le segment de consultation (154A-B) seulement dans le cas où au moins un niveau de contexte d'utilisation et un niveau de contexte structurel du segment de consultation correspondent à ceux de la correspondance exacte respective.

9. Procédé selon la revendication 8, dans lequel le au moins un niveau de contexte d'utilisation comprend le niveau de contexte d'utilisation cible précédent.

10. Procédé selon la revendication 8, dans lequel le au moins un niveau de contexte d'utilisation comprend un niveau de contexte d'utilisation source précédent.

11. Procédé selon l'une quelconque des revendications précédentes, dans lequel l'affectation de priorités (S11) comprend les étapes consistant à :
choisir en premier une correspondance ICE ayant des niveaux de contexte d'utilisation source et cible et un niveau de contexte structurel correspondant à ceux du segment de consultation (154A-B),
lorsque la première étape de choix n'est pas concluante, choisir en deuxième une correspondance ICE ayant des niveaux de contexte d'utilisation source et cible correspondant à ceux du segment de consultation (154A-B),
lorsque la deuxième étape de choix n'est pas concluante, choisir en troisième une correspondance ICE ayant soit un niveau de contexte d'utilisation source précédent, soit le niveau de contexte d'utilisation cible précédent qui correspond à celui du segment de consultation (154A-B) par rapport à une correspondance ICE ayant seulement soit un niveau de contexte d'utilisation source suivant, soit le niveau de contexte d'utilisation cible suivant qui correspond à celui du segment de consultation (154A-B),
lorsque la troisième étape de choix n'est pas concluante, choisir en quatrième une correspondance ICE ayant n'importe quel niveau de contexte d'utilisation qui correspond à celui du segment de consultation (154A-B) par rapport à une correspondance ICE ayant seulement un niveau de contexte de structurel correspondant à celui du segment de consultation (154A-B),
lorsque la quatrième étape de choix n'est pas concluante, choisir en cinquième une correspondance ICE ayant un niveau de contexte structurel correspondant à celui du segment de consultation (154A-B) par rapport à une correspondance ICE ayant un niveau de contexte structurel différent de celui du segment de consultation (154A-B),
lorsque la cinquième étape de choix n'est pas concluante, choisir en sixième une correspondance ICE ayant une position la plus proche de la position du segment de consultation dans l'actif.

12. Système de détermination d'un niveau de correspondance d'une pluralité de textes sources (152A-B) mémorisés dans une mémoire de traduction (128) pour un segment de consultation (154A-B) devant être traduit, le système comprenant :
un moyen destiné à déterminer (S1) toutes les correspondances exactes pour le segment de consultation (154A-B) dans la pluralité de textes sources (152A-B), et
un moyen destiné à déterminer (S5), dans le cas où au moins une correspondance exacte est déterminée, qu'une correspondance exacte respective est une correspondance exacte en contexte (ICE) pour le segment de consultation (154A-B) dans le cas où un contexte du segment de consultation (154A-B) correspond à celui de la correspondance exacte respective,
dans lequel, dans le cas où plus d'une correspondance ICE est déterminée, la détermination de la correspondance ICE comprend l'affectation d'une priorité (S11) à chaque correspondance ICE selon un degré de correspondance de contexte de sorte qu'une correspondance ICE plus appropriée puisse être préférée par rapport à une ou plusieurs autres correspondances ICE, et
dans lequel le contexte comprend au moins deux niveaux
**caractérisé en ce que**
lesdits au moins deux niveaux comprennent un niveau de contexte d'utilisation source et un niveau de contexte d'utilisation cible,
ledit niveau de contexte d'utilisation cible comprend un niveau de contexte d'utilisation cible précédent et/ou un niveau de contexte d'utilisation cible suivant, et
une correspondance ICE ayant un niveau de contexte d'utilisation cible correspondant à celui du segment de consultation (154A-B) se voit attribuer un degré de correspondance de contexte supérieur à celui d'une correspondance ICE ayant seulement un niveau de contexte d'utilisation source correspondant à celui du segment de consultation (152A-B).

13. Logiciel informatique conçu pour exécuter le procédé de la revendication 1.
